# EUROPÄISCHE PATENTSCHRIFT

(11) **EP 2 825 425 B1**
(45) Veröffentlichungstag und Bekanntmachung des Hinweises auf die Patenterteilung: **29.06.2016**
(21) Anmeldenummer: 13712133.1
(22) Anmeldetag: 14.03.2013
(51) Int. Cl.: B60R 25/24, G07C 9/00, G06F 9/44

(54) **SCHLIESSSYSTEM, INSBESONDERE FÜR EIN KRAFTFAHRZEUG**
LOCKING SYSTEM, ESPECIALLY FOR A MOTOR VEHICLE
SYSTÈME DE FERMETURE, EN PARTICULIER POUR UN VÉHICULE À MOTEUR

(30) Priorität: 16.03.2012 DE 102012005182
(43) Veröffentlichungstag der Anmeldung: 21.01.2015
(73) Patentinhaber: Marquardt GmbH, 78604 Rietheim-Weilheim (DE)
(72) Erfinder: FISCHER, Jörg, 78166 Donaueschingen (DE); BÄR, Bernd, 78628 Rottweil (DE)
(74) Vertreter: Otten, Roth, Dobler & Partner mbB Patentanwälte
(86) Internationale Anmeldenummer: PCT/EP2013/000760
(87) Internationale Veröffentlichungsnummer: WO 2013/135380

(56) Entgegenhaltungen:
- EP-A1- 2 112 038
- EP-A2- 1 164 708
- EP-A2- 1 736 871
- WO-A1-2006/000458
- DE-C1- 19 624 846
- US-A- 5 874 785
- US-A1- 2010 271 171

## Beschreibung

Die Erfindung betrifft ein Schließsystem nach dem Oberbegriff des Patentanspruchs 1.

Bei erhöhten Sicherheitsanforderungen werden elektronische Schließsysteme verwendet, die beispielsweise mittels elektromagnetischer Wellen arbeiten. Insbesondere bei Kraftfahrzeugen werden solche Schließsysteme als Türschließsysteme für die Zugangsberechtigung und/oder als Zündschlosssysteme, Lenkradverriegelungen, Wegfahrsperren o. dgl. für die Fahrberechtigung verwendet.

Derartige Schließsysteme sind aus der DE 43 40 260 A1 bekannt. Das Schließsystem besteht aus einer wenigstens zwei Zustände besitzenden, als Steuereinrichtung zur Ent- und/oder Verriegelung der Autotüren, des Zündschlosses o. dgl. ausgebildeten ersten Einrichtung und einer zugehörigen, in der Art eines elektronischen Schlüssels ausgebildeten zweiten Einrichtung. Die beiden Einrichtungen besitzen zu deren bestimmungsgemäßen Betrieb Sender und/oder Empfänger für die Übertragung der elektromagnetischen Signale, derart dass eine Kommunikation zwischen den beiden Einrichtungen ermöglicht ist. Im bestimmungsgemäßen Betrieb ist zwischen dem Schlüssel und der Steuereinrichtung wenigstens ein Signal als codiertes Betriebssignal zur Authentifikation des Schlüssels übertragbar, so dass nach positiver Auswertung des übertragenen Betriebssignals und damit bei berechtigtem Schlüssel eine Änderung des Zustandes der Steuereinrichtung bewirkbar ist.

Solche Schließsysteme sind auch mit sogenannten "Keyless"-Funktionalitäten weiterentwickelt. So ist bei der "KeylessEntry"-Funktionalität eine manuelle Betätigung des elektronischen Schlüssels durch den Benutzer nicht mehr notwendig. Es genügt, dass der Benutzer den Schlüssel mit sich führt. Das Betriebssignal wird dann für die Zugangsberechtigung zwischen den beiden Einrichtungen selbsttätig übertragen, wenn der Benutzer sich in einem, in der Nähe des Kraftfahrzeugs befindlichen Wirkbereich aufhält und dort beispielsweise den Türgriff an der Autotüre betätigt. Ebenso können diese Schließsysteme eine "KeylessGo"-Funktionalität aufweisen, wobei das Betriebssignal für die Fahrberechtigung zwischen den beiden Einrichtungen selbsttätig übertragen wird, wenn der Benutzer sich innerhalb des Kraftfahrzeugs befindet und beispielsweise eine Start/StopTaste im Armaturenbrett betätigt.

Die erste Einrichtung kann einen Mikroprozessor zu deren Betrieb, insbesondere zum Betrieb des Senders und/oder Empfängers, aufweisen. Zur Energieeinsparung ist die erste Einrichtung lediglich im Betrieb, wenn die entsprechenden Funktionalitäten des Schließsystems durchzuführen sind. Hierzu ist dann die erste Einrichtung in den betriebsbereiten Zustand überzuführen, wozu der Mikroprozessor zu starten ist (StartUp). Es hat sich herausgestellt, dass die StartUp-Zeiten des Mikroprozessors groß sind. Dies ergibt wiederum eine deutlich bemerkbare Verzögerung für den Benutzer des Schließsystems.

Der Erfindung liegt die Aufgabe zugrunde, das Schließsystem derart weiterzuentwickeln, dass die StartUp-Zeit verringert ist. Insbesondere soll eine Optimierung des bisherigen KeylessEntry/Go-Systems erfolgen.

Diese Aufgabe wird bei einem gattungsgemäßen Schließsystem durch die kennzeichnenden Merkmale des Ansprüche 1 und 9 gelöst.

Beim erfindungsgemäßen Schließsystem ist eine Steuerschaltung zum Betrieb des Senders und/oder Empfängers in der ersten Einrichtung vorgesehen. Die Steuerschaltung betreibt den Sender und/oder Empfänger für wenigstens einen Teil der Kommunikation zwischen den beiden Einrichtungen unabhängig vom Mikroprozessor. Dadurch kann die Kommunikation innerhalb des Schließsystems sofort erfolgen, ohne dass die vorherige Betriebsbereitschaft des Mikroprozessors erforderlich ist. Die StartUp-Zeit des Mikroprozessors wirkt sich somit vorteilhafterweise nicht auf die Betriebsbereitschaft des Schließsystem aus. Weitere Ausgestaltungen der Erfindung sind Gegenstand der Unteransprüche.

Zweckmäßigerweise kann der Sender und/oder Empfänger in der ersten Einrichtung bei Beginn der Kommunikation zwischen den beiden Einrichtungen wenigstens solange mittels der Steuerschaltung betrieben werden bis der Mikroprozessor betriebsbereit ist. Gleichzeitig kann dann bei Beginn der Kommunikation der Mikroprozessor in den bestimmungsgemäßen Betrieb übergeführt werden, indem dessen StartUp veranlasst wird. In kostengünstiger Art und Weise kann die Steuerschaltung als eine integrierte Schaltung in der Art eines ASIC's ausgebildet sein.

In einer Weiterbildung kann die erste Einrichtung ein erstes elektromagnetisches Signal für die zugehörige, beispielsweise als Transponder- und/oder Funkschlüssel ausgebildete zweite Einrichtung als Wecksignal senden. Dadurch wird die zweite Einrichtung aus einem Ruhezustand mit verringertem Energiebedarf in einen aktivierten Zustand für den bestimmungsgemäßen Betrieb übergeführt. Die erste Einrichtung kann nach Aussenden des ersten elektromagnetischen Signals ein Bereichsabgrenzungssignal als drittes elektromagnetisches Signal senden, mit dessen Hilfe die zugehörige zweite Einrichtung deren Standort in Bezug auf die erste Einrichtung am und/oder im Kraftfahrzeug bestimmen kann. Der Standort der zweiten Einrichtung in Bezug auf die erste Einrichtung am und/oder im Kraftfahrzeug kann anschließend mit einem vierten Signal als Rückantwortsignal von der zweiten zur ersten Einrichtung gesendet werden. Sind diese Signale erfolgreich übermittelt, so kann schließlich die Authentifikation der zweiten Einrichtung mittels weiterer fünfter Signale als codierte Betriebssignale durchgeführt werden. Sind somit die für das Wecken sowie die Bereichsabgrenzung notwendigen Vorbedingungen nicht erfüllt, so wird die an sich aufwendige Authentifikation gar nicht durchgeführt, womit eine effizientere Betriebsweise für das Schließsystem ermöglicht ist. Das der Authentifikation dienende fünfte elektromagnetische Signal kann schließlich in einer die Diebstahlsicherheit erhöhenden bidirektionalen Kommunikation bestehend aus mehreren Teilsignalen zwischen der ersten und der zweiten Einrichtung übertragen werden.

Zwischen dem Weck- und dem Bereichsabgrenzungssignal kann von der ersten Einrichtung ein zweites elektromagnetisches Signal als Selektionssignal gesendet werden, das insbesondere eine Information zur Identität des Kraftfahrzeugs enthält. Mit Hilfe des Selektionssignals kann der Dialog mit der zweiten Einrichtung bereits dann frühzeitig abgebrochen werden, wenn die zweite Einrichtung zu einem anderen Kraftfahrzeug, das gegebenenfalls jedoch vom gleichen Kraftfahrzeug-Typ ist, zugehörig ist. Somit werden lediglich demselben Kraftfahrzeug-Typ zugeordnete zweite Einrichtungen aktiviert und/oder verbleiben im aktivierten Zustand sowie im aktivierten Zustand befindliche, nicht zugehörige zweite Einrichtungen werden in den Ruhezustand zurückgeführt. Dadurch ist jeweils eine weitere Steigerung in der Effizienz der Betriebsweise des Schließsystems möglich.

Besonders bevorzugt ist, für das Weck- und/oder das Bereichsabgrenzungssignal ein induktives Signal zu verwenden, indem die Trägerwelle für das erste Signal und/oder das dritte Signal eine im induktiven, niederfrequenten (NF-)Bereich liegende Frequenz aufweist. Aufgrund der begrenzten Reichweite eines induktiven Signals lässt sich somit der Wirkbereich für das Schließsystem auf einfache Art und Weise einstellen. Gleichzeitig wird dadurch die Sicherheit vor Manipulation am Schließsystem durch unberechtigte Benutzer gesteigert. Beispielsweise kann die Frequenz für die NF-Trägerwelle in etwa 20 kHz, 120 kHz, 125 kHz o. dgl. betragen. Weiterhin ist bevorzugt, für das Selektionssignal und/oder das Rückantwortsignal und/oder das codierte Betriebssignal ein Funksignal zu verwenden, indem die Trägerwelle für das zweite Signal und/oder das vierte und/oder das fünfte Signal eine im höherfrequenten (RF/HF-)Bereich liegende Frequenz aufweist. Dadurch ist aus Komfortgründen für den Benutzer ein vergrößerter Wirkbereich gegeben. Beispielsweise kann die Frequenz für die RF- bzw. HF-Trägerwelle in etwa 315 MHz, 433 MHz, 868 MHz o. dgl. betragen.

In einer weiteren Ausgestaltung weist die erste Einrichtung einen HF-Sender und/oder - Empfänger sowie einen LF-Sender auf. Der LF-Sender umfasst einen LF-ASIC zu dessen Betrieb, womit der LF-Sender im wesentlichen autark arbeitet. Zweckmäßigerweise handelt es sich bei der Steuerschaltung beziehungsweise der integrierten Schaltung um den LF-ASIC. Der LF-ASIC wird somit in kostengünstiger Weise für die Verringerung der StartUp-Zeit mitbenutzt.

In einer Weiterbildung, die sich durch eine hohe Integration auszeichnet, kann der HF-Sender und/oder -Empfänger und der LF-Sender sowie der LF-ASIC als eine einzige integrierte LF/HF-Schaltung ausgestaltet sein. Falls gewünscht kann die integrierte LF/HF-Schaltung noch eine Schaltungsanordnung zur externen Kommunikation mit einem Bussystem beinhalten. In diesem Fall kann sogar auf einen Mikroprozessor in der ersten Einrichtung verzichtet werden, da die integrierte LF/HF-Schaltung den kompletten Betrieb der ersten Einrichtung durchführen kann. Damit spart eine solche Weiterbildung Bauraum im Kraftfahrzeug und ist zudem besonders kostengünstig.

Für eine besonders bevorzugte Ausgestaltung der Erfindung ist nachfolgendes festzustellen. Geschaffen ist ein zeitoptimiertes sowie flexibel skalierbares Standalone-KeylessEntry/Go-System, das beispielsweise für den Einsatz in einem Body-Computer (BCM), in einem Gateway, in einem elektronischen Zündschloss o. dgl. des Kraftfahrzeugs verwendet werden kann. Um die bisher langen StartUp-Zeiten des Mikrocomputers bei Verwendung von AUTOSAR-Komponenten zu umgehen und gleichzeitig die Reaktionszeit des KeylessEntry/Go-Systems zu verringern, wird der Mikrocomputer aus der anfänglichen Kommunikation zwischen dem KeylessEntry/Go-Steuergerät und dem Schlüssel entfernt. Diese Funktionalität wird von einem LF-ASIC übernommen. Dieser liefert, zusätzlich zu seiner bisherigen Auto-LF-Funktionalität, einen Trigger für das Antennenmodul und/oder den HF-Transceiver. Hierdurch wird das Senden einer entsprechend konfigurierten und hinterlegten HF-Botschaft ausgelöst. Nach dem Ansteuern der Ortungsfelder ist der Mikrocomputer betriebsbereit und kann die HF-Daten empfangen.

Die mit der Erfindung erzielten Vorteile bestehen insbesondere darin, dass die KeylessEntry/Go-Kommunikation zeitlich vom Hauptcontroller unabhängig und/oder autark ist. Dadurch ist diese auch unabhängig vom StartUp des Mikrocomputers und/oder vom StartUp der entsprechenden Standard-Software-Componente (OS/SSWC) für dessen Betrieb. Sobald ein Event des Türsteuergeräts vorhanden ist, kann die Kommunikation unabhängig vom Status des Mikrocomputers durchgeführt werden. Desweiteren ist diese Lösung unabhängig von allen zeitlichen Verschiebungen, die in einem Betriebssystem zwangsläufig auftreten. Zwar gelten Toleranzen im Millisekunden-Bereich im Automotive-Bereich noch als Echtzeit, sind aber für ein KeylessEntry/Go-System erheblich zu groß. Bei einem solchen System ist es erwünscht, dass lediglich mit Toleranzen im Mikrosekunden-Bereich gearbeitet wird. Weiter vorteilhaft ist, dass mit Hilfe der Erfindung die Integration der bisher getrennten Steuergeräte für das elektronische Zündschloss und für KeylessEntry/Go in ein gemeinsames Steuergerät ermöglicht ist.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: ein mit einem Schließsystem ausgestattetes Kraftfahrzeug,
- Fig. 2: ein schematisches Blockschaltbild für das eine erste Einrichtung sowie eine zweite Einrichtung aufweisende Schließsystem im Kraftfahrzeug,
- Fig. 3: ein schematisches Blockschaltbild der ersten sowie der zweiten Einrichtung mit einem Diagramm zur Übertragung der Signale,
- Fig. 4: das Blockschaltbild für die erste Einrichtung,
- Fig. 5: das Blockschaltbild für die erste Einrichtung in einer weiteren Ausgestaltung,
- Fig. 6: das Blockschaltbild für die erste Einrichtung in wiederum einer weiteren Ausgestaltung,
- Fig. 7: das Blockschaltbild für die erste Einrichtung in nochmals einer weiteren Ausgestaltung,
- Fig. 8: das Blockschaltbild für die erste Einrichtung in abermals einer weiteren Ausgestaltung und
- Fig. 9: das Zeitdiagramm für die Kommunikation zwischen der ersten und der zweiten Einrichtung.

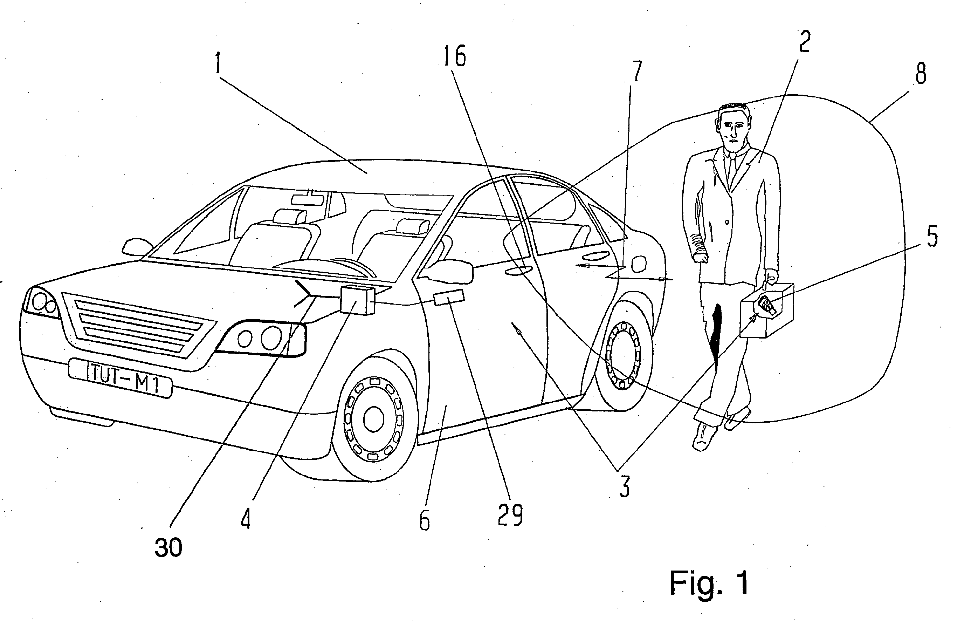

In Fig. 1 ist ein Kraftfahrzeug 1 mit dem berechtigten Benutzer 2 zu sehen. Das Kraftfahrzeug 1 ist für die Zugangsberechtigung mit einem Schließsystem 3 als Türschließsystem versehen, das eine als eine Steuereinrichtung ausgebildete erste Einrichtung 4 und eine zugehörige zweite Einrichtung 5 umfaßt. Die zweite Einrichtung 5 ist in der Art eines elektronischen Schlüssels, eines Identifikations(ID)-Gebers, einer Chipkarte, einer Smartcard o. dgl. ausgebildet. Die zweite Einrichtung 5 befindet sich im Besitz des berechtigten Benutzers 2, womit dieser innerhalb eines Wirkbereichs 8 Zugang zum Kraftfahrzeug 1 besitzt.

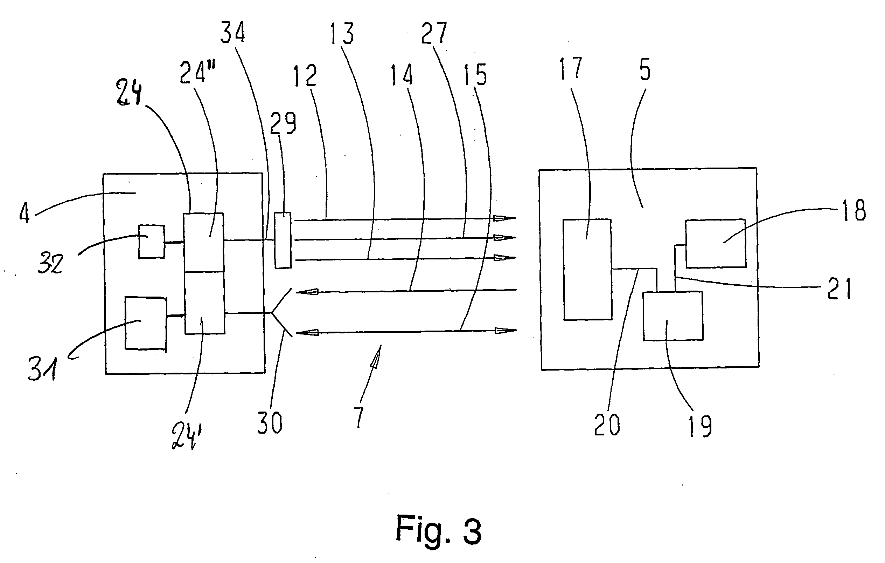

Die erste Einrichtung 4 besitzt wenigstens zwei Zustände, wobei im ersten Zustand eine Verriegelung und im zweiten Zustand eine Entriegelung der Autotüren 6 vorliegt. Die beiden Einrichtungen 4, 5 besitzen zu deren bestimmungsgemäßen Betrieb Mittel zum Senden und/oder Empfangen von Signalen 7 mittels einer elektromagnetischen Trägerwelle, womit eine Kommunikation zwischen den beiden Einrichtungen 4, 5 ermöglicht ist. Bei wenigstens einem dieser zwischen der zweiten Einrichtung 5 und der ersten Einrichtung 4 übertragenen Signale 7 handelt es sich um ein codiertes, elektromagnetisches Betriebssignal 15 (siehe Fig. 3). Das codierte Betriebssignal 15 dient zur Authentifikation der zweiten Einrichtung 5, womit bei berechtigter zweiter Einrichtung 5 nach positiver Auswertung des übertragenen Betriebssignals 15 eine Änderung des Zustandes der ersten Einrichtung 4 bewirkbar ist. Die Übertragung des codierten Betriebssignals 15 erfolgt dann, wenn der berechtigte Benutzer 2 den Türgriff 16 an der Autotüre 6 betätigt oder sich dem Türgriff 16 annähert. Dadurch wird die Entriegelung der Autotüren 6 entsprechend der KeylessEntry-Funktionalität ausgelöst. Ebensogut kann die Übertragung des codierten Betriebssignals 15 auch selbsttätig ohne Mitwirkung des Benutzers 2 erfolgen, sobald dieser den Wirkbereich 8 betritt, was jedoch im folgenden nicht näher betrachtet wird. Schließt der Benutzer die Autotüren 6 von außen, so erfolgt eine selbsttätige Verriegelung der Autotüren 6. Ebensogut kann die selbsttätige Verriegelung der Autotüren 6 erfolgen, nachdem der Benutzer 2 den Wirkbereich 8 verlassen hat.

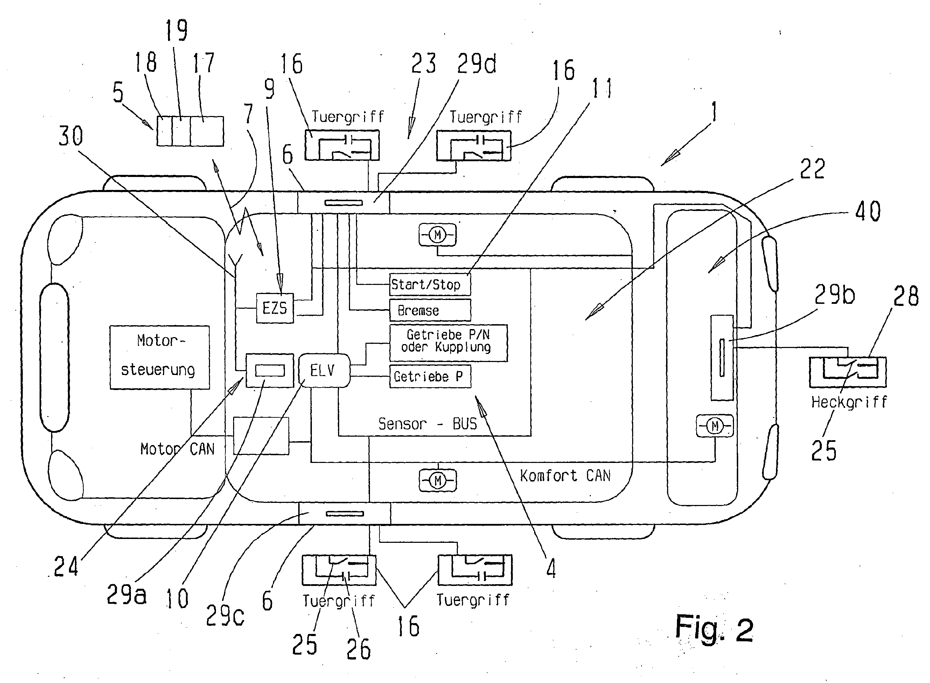

Das Schließsystem 3 stellt weiterhin die Fahrberechtigung für das Kraftfahrzeug 1 fest. Hierzu bewirkt die als Steuereinrichtung ausgebildete erste Einrichtung 4 ebenfalls entsprechend den beiden Zuständen die Ent- und/oder Verriegelung des Zündschlosses 9 (elektronisches Zündschloß EZS) und/oder der Lenkradverriegelung 10 (elektrische Lenkradverriegelung ELV), die in Fig. 2 zu sehen sind. Ebensogut kann ein sonstiges funktionsrelevantes Bauteil des Kraftfahrzeugs 1 durch die erste Einrichtung 4 dementsprechend angesteuert werden. Beispielsweise kann dadurch eine Freigabe und/oder Sperrung einer Wegfahrsperre, des Motorsteuergeräts o. dgl. erfolgen. Die Übertragung des codierten Betriebssignals 15 zur Authentifikation der zweiten Einrichtung 5 erfolgt dann, wenn der berechtigte Benutzer 2 sich im Kraftfahrzeug 1 befindet und einen Start/Stop-Schalter 11 betätigt. Dadurch wird der Start-Vorgang o. dgl. des Kraftfahrzeugs 1 entsprechend der KeylessGo-Funktionalität ausgelöst.

Die Übertragung der Signale 7 für die KeylessEntry/Go-Funktionalität wird durch Betätigung eines Schalters und/oder eines Sensors vom Benutzer 2 ausgelöst. Für die Zugangsberechtigung kann es sich beispielsweise um die manuelle Betätigung des Türgriffs 16, des Heckgriffs 28 o. dgl. handeln, wie in Fig. 2 zu sehen ist. Hierzu ist im Türgriff 16, Heckgriff 28 o. dgl. des Kraftfahrzeugs 1 ein Schalter 25 angeordnet. Wird ein beispielsweise kapazitiv arbeitender Näherungssensor 26 verwendet, wie ebenfalls in Fig. 2 am Türgriff 16 gezeigt ist, so kann vom Sensor 26 die Annäherung der Hand des Benutzers 2 an den Türgriff 16 bzw. Heckgriff 28 detektiert werden. Für die Fahrberechtigung befindet sich der vom Benutzer 2 manuell betätigbare Start/Stop-Schalter 11 im Kraftfahrzeug 1. Zweckmäßigerweise ist der Start/Stop-Schalter 11 am Gangwahlhebel, am Zündschloß 9, im Armaturenbrett, in der Mittelkonsole o. dgl. im Kraftfahrzeug 1 angeordnet.

Die Funktionsweise des erfindungsgemäßen Schließsystems 3 soll nun anhand der Fig. 3 näher erläutert werden. Zunächst sendet die erste Einrichtung 4 mittels eines Senders/Empfängers 24 als Mittel zum Senden und/oder Empfangen von Signalen ein als Wecksignal bezeichnetes erstes elektromagnetisches Signal 12 für die zugehörige zweite Einrichtung 5. Der ersten Einrichtung 4 ist dabei wenigstens eine Antenne 29, 30 zur Übertragung der Signale 7 zugeordnet. Durch das Wecksignal 12 wird die zweite Einrichtung 5 aus einem Ruhezustand mit verringertem Energiebedarf in einen aktivierten Zustand für den bestimmungsgemäßen Betrieb übergeführt. Danach sendet die erste Einrichtung 4 wenigstens ein weiteres, drittes elektromagnetisches Signal 13, das nachfolgend auch als Bereichsabgrenzungssignal bezeichnet ist. Dadurch kann die zugehörige zweite Einrichtung 5 deren Standort in Bezug auf die erste Einrichtung 4 bestimmen. Insbesondere lässt sich feststellen, ob die zweite Einrichtung 5 außerhalb am Kraftfahrzeug 1 sowie gegebenenfalls an welcher Stelle des Außenraums 23 und/oder im Innenraum 22 des Kraftfahrzeugs 1 befindlich ist. Nachfolgend sendet die zweite Einrichtung 5 mittels eines Senders/Empfängers 17 ein die Information zum ermittelteten Standort beinhaltendes viertes Signal 14 zur ersten Einrichtung 4, das im folgenden auch als Rückantwortsignal bezeichnet ist. Schließlich wird dann, wie bereits beschrieben, das fünfte elektromagnetische Signal als codiertes elektromagnetisches Betriebssignal 15 zur Authentifikation mittels der Sender/Empfänger 24, 17 zwischen der ersten und der zweiten Einrichtung 4, 5 übertragen. Das Signal 15 kann insbesondere aus mehreren Teilsignalen bestehen und in einer bidirektionalen Kommunikation zwischen den beiden Einrichtungen 4, 5 übertragen werden. Im Hinblick auf nähere Einzelheiten zur bidirektionalen Kommunikation an sich wird auch auf die DE 43 40 260 A1 verwiesen.

Die zweite Einrichtung 5, die als schematisches Blockschaltbild in Fig. 3 gezeigt ist, weist den Sender/Empfänger 17 als Mittel zum Senden und/oder Empfangen von Signalen und eine beispielsweise aus einem Mikrocomputer bestehende Logikschaltung 18 auf. Weiter ist in der zweiten Einrichtung 5 ein Mittel 19 zur Messung der Feldstärke wenigstens eines von der ersten Einrichtung 4 übertragenen Signals angeordnet. Das Mittel 19 zur Messung der Feldstärke misst die Feldstärke beziehungsweise die Intensität eines der übertragenen Signale, und zwar des Bereichsabgrenzungssignals 13. Zweckmäßigerweise ist das Mittel 19 zur Messung der Feldstärke als ein integrierter Baustein ausgestaltet, der nachfolgend auch als RSS(Radio Signal Strength)-Chip bezeichnet ist. Der RSS-Chip 19 besitzt einen Eingang 20, der mit dem Sender/Empfänger 17 verbunden ist, sowie einen RSSI(Radio Signal Strength Indicator)-Ausgang 21, der wiederum mit der Logikschaltung 18 verbunden ist. Der RSS-Chip 19 erhält über den Eingang 20 das vom Sender/Empfänger 17 jeweils empfangene Signal 13 und erzeugt an seinem RSSI-Ausgang 21 ein in funktioneller Abhängigkeit zur Feldstärke des Signals 13 stehendes RSSI-Signal. Beispielsweise kann das RSSI-Signal proportional oder logarithmisch zur Feldstärke des Signals 13 abhängig sein. Durch entsprechende Auswertung des RSSI-Signals läßt sich dann die Standortbestimmung in der Logikschaltung 18 vornehmen.

Das Wecksignal 12 kann beispielsweise eine Kennung zum Kraftfahrzeug-Typ enthalten. Nach Empfang des Wecksignals 12 sind zunächst sämtliche im Wirkbereich 8 befindliche zweite Einrichtungen 5, die zum selben Kraftfahrzeug-Typ gehören, aktiviert. In einer weiteren Ausgestaltung des Schließsystems 3 sendet die erste Einrichtung 4 zwischen dem ersten Signal 12 und dem dritten Signal 13 ein zweites elektromagnetisches Signal 27 zur zweiten Einrichtung 5 als Selektionssignal, wie näher anhand von Fig. 3 zu erkennen ist. Das zweite Signal 27 enthält eine Information über die nähere Identität des Kraftfahrzeugs 1. Dadurch wird bewirkt, dass lediglich die tatsächlich zur ersten Einrichtung 4 zugehörigen zweiten Einrichtungen 5 im aktivierten Zustand verbleiben. Im aktivierten Zustand befindliche, nicht zum Kraftfahrzeug 1 zugehörige zweite Einrichtungen werden jedoch in den Ruhezustand zurückgeführt.

Es bietet sich an, die zur ersten Einrichtung 4 zugehörigen zweiten Einrichtungen 5 in gruppenartige Linien einzuteilen. Bevorzugterweise besitzt ein Kraftfahrzeug 1 zwei Linien, und zwar einen ersten elektronischen Schlüssel sowie Ersatzschlüssel als erste Linie und einen zweiten elektronischen Schlüssel sowie Ersatzschlüssel als zweite Linie. Zweckmäßigerweise weisen die Linien eine Rangfolge zur Durchführung der Authentifikation auf, so dass bei Vorhandensein beider Linien im Wirkbereich 8 lediglich eine Authentifikation mit der ranghöheren Linie, die entsprechend ausgewählt wird, durchzuführen ist. Das Selektionssignal 27 kann nun zusätzlich eine Information zu den der ersten Einrichtung 4 zugeordneten Linien enthalten, um dem Schließsystem 3 gegebenenfalls eine Auswahl für die Authentifikation zu gestatten.

Besonders bevorzugt ist, dass die Trägerwelle für das erste Signal 12 als Wecksignal und/oder das dritte Signal 13 als Bereichsabgrenzungsignal eine im induktiven, niederfrequenten (LF- bzw. NF-)Bereich liegende Frequenz aufweist. Beispielsweise kann diese Frequenz in etwa 20 kHz, 120 kHz, 125 kHz o. dgl. betragen. Vorteilhafterweise weist ein solches induktives Signal eine auf die unmittelbare Umgebung des Kraftfahrzeugs 1 oder auf das Kraftfahrzeug 1 selbst begrenzte Reichweite auf. Dadurch wird erreicht, dass die zweite Einrichtung 5 lediglich dann aktiviert wird, wenn sie im Innenraum 22 des Kraftfahrzeugs 1 oder in einem der Wirkbereiche 8 im Außenraum 23 am Kraftfahrzeug 1 befindlich ist, womit Störungen und/oder Sicherheitslücken durch Überreichweiten vermieden sind. Aufgrund der begrenzten Reichweite von induktiven Signalen ist den jeweiligen Bereichen des Kraftfahrzeugs 1 jeweils eine eigene induktive Antenne 29 zugeordnet, und zwar dem Innenraum 22 die LF-Antenne 29a, dem Heckbereich 40 die LF-Antenne 29b und den Autotüren 16 die LF-Antennen 29c, 29d, wie anhand der Fig. 2 zu erkennen ist. Falls gewünscht kann auch das zweite Signal 27, wie in Fig. 3 gezeigt ist, eine im niederfrequenten (NF-)Bereich liegende Frequenz aufweisen. Es ist jedoch besonders bevorzugt, dass die Trägerwelle für das zweite Signal 27 als Selektionssignal und/oder das vierte Signal 14 als Rückantwortsignal und/oder das fünfte Signal 15 als Betriebssignal eine im höherfrequenten (RF- bzw. HF-)Bereich liegende Frequenz aufweist. Beispielsweise kann diese Frequenz in etwa 315 MHz, 433 MHz, 868 MHz o. dgl. betragen. Aufgrund der größeren Reichweite von höherfrequenten Signalen reicht es aus, lediglich eine HF- bzw. RF-Antenne 30 im Kraftfahrzeug 1 vorzusehen, wie anhand von Fig. 2 ersichtlich ist.

Wie in Fig. 3 zu sehen ist, weist die erste Einrichtung 4 einen Mikroprozessor 31 zu deren Betrieb, und zwar insbesondere zum Betrieb des Senders und/oder Empfängers 24 auf. Desweiteren ist eine Steuerschaltung 32 in der ersten Einrichtung 4 zum Betrieb des Senders und/oder Empfängers 24 vorgesehen, wobei die Steuerschaltung 32 den Sender und/oder Empfänger 24 für wenigstens einen Teil der Kommunikation zwischen den beiden Einrichtungen 4, 5 unabhängig vom Mikroprozessor 31 betreibt. Die Steuerschaltung 32 ist als eine integrierte Schaltung in der Art eines ASIC's ausgebildet. Der Sender und/oder Empfänger 24 in der ersten Einrichtung 4 wird bei Beginn der Kommunikation zwischen den beiden Einrichtungen 4, 5 wenigstens solange mittels der integrierten Schaltung 32 betrieben bis der Mikroprozessor 31 betriebsbereit ist.

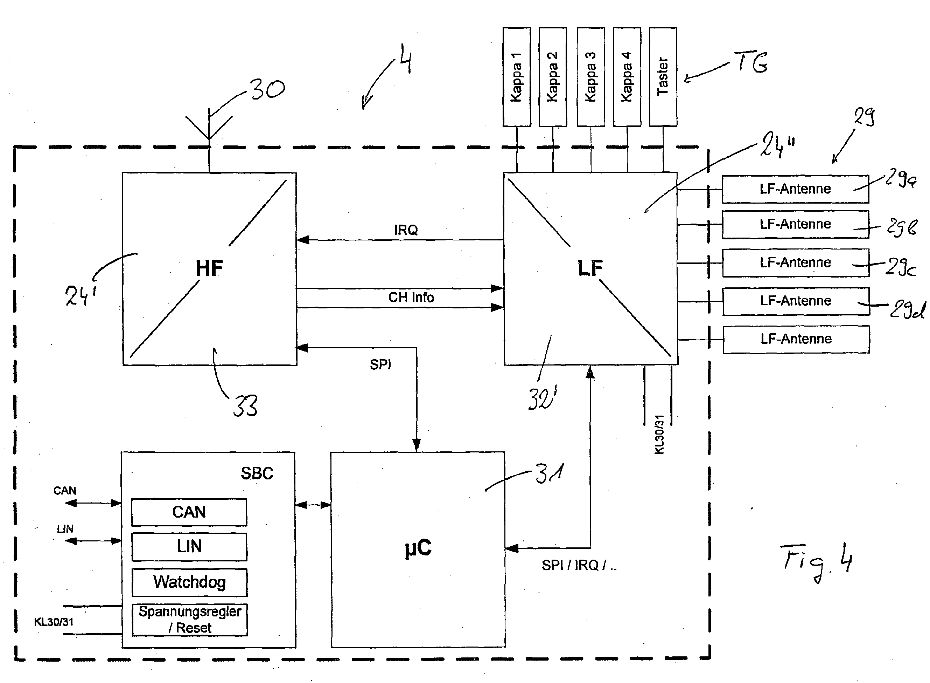

Eine nähere Ausgestaltung des Senders und/oder Empfängers 24 ist in Fig. 4 zu sehen. Die erste Einrichtung 4 weist einen HF-Sender und/oder -Empfänger 24' sowie einen LF-Sender 24" auf. Der LF-Sender 24" umfasst wiederum einen LF-ASIC 32' zu dessen Betrieb. Bei der Steuerschaltung 32, die während der Start-Zeit des Mikroprozessors 31 zusätzlich den HF-Sender 24'bis zur Betriebsbereitschaft des Mikroprozessores 31 betreibt, handelt es sich in diesem Fall um den LF-ASIC 32'.

Nachfolgend sollen noch Ausgestaltungen der ersten Einrichtung 4 für ein zeitoptimiertes, flexibel-skalierbares Standalone KeylessGo(KG)-System, beispielsweise für den Einsatz in einem Kraftfahrzeug-Bodycomputer (BCM), in einem Gateway, in einem elektronischen Zündschloss (EZS) o. dgl., näher beschrieben werden. Nach dem bisherigen aktuellen Stand dauert die KeylessGo(KG)-Kommunikation zwischen den beiden Einrichtungen 4, 5 typischerweise ca. 75 Millisekunden (ms). Die KG-Kommunikation kann erst dann durchgeführt werden, wenn der Mikroprozessor (µC) 31 hochgefahren ist. Das erfindungsgemäße, zeitlich optimierte KG-System bietet einen KG-Ablauf von weniger als 45 ms, ist also deutlich schneller als bisher. Die KG-Kommunikation ist zeitlich vom Hauptcontroller 31 unabhängig und/oder autark, und dadurch auch unabhängig vom StartUp des Mikrocomputers 31 und vom StartUp der auf dem Mikrocomputer 31 ausgeführten Standard-Software-Componente (OS/SSWC). Sobald ein Event des Türsteuergeräts (TG) vom Fahrzeug 1 vorhanden ist, kann die Kommunikation unabhängig vom Status des Mikrocomputers 31 durchgeführt werden.

Ausgestaltung der ersten Einrichtung 4 als Version 1 gemäß Fig. 4:
Es erfolgt eine Integration der Kommunikation zwischen KG-Steuergerät und Antennenmodul 30 in den LF-ASIC 32'. Die Konfiguration, also die LF- und HF-Daten, wird in das LF-ASIC 32'geschrieben. Bei Vorliegen des TG-Protokolls wird der Ablauf gestartet. Hierzu sendet das LF-Asic 32' nach Erkennen eines gültigen TG-Protokolls ein LF-Wecksignal 12 an einen Schlüssel 5. Parallel hierzu liest das LF-ASIC 32' Daten vom Antennenmodul 30 ein, insbesondere den besten, ungestörtesten Funkkanal. Direkt im Anschluss an das Wecksignal 12 werden weitere Konfigurations(Config)-Daten über LF an den Schlüssel 5 übermittelt. Bei diesen Config-Daten kann es sich beispielsweise um den HF-Kanal, die Anzahl der LF-Felder o. dgl. handeln. Im Anschluss daran übermittelt das Fahrzeug 1 weitere Daten zur Selektion des Schlüssels 5. Diese können wahlweise über HF (bei bidirektionalen Systemen) oder über LF (bei unidirektionalen HF-Systemen) übertragen werden. Danach wird die zuvor vom Fahrzeug 1 dem Schlüssel 5 mitgeteilte Anzahl der LF-Felder gesendet. Parallel zum Aussenden der Daten über LF und/oder HF fährt der Mikrocomputer 31 des Steuergeräts (SG) 4 hoch. Dieser ist betriebsbereit sobald das LF-ASIC 32' die Kommunikation abgeschlossen hat. D.h. der Controller 31 ist in der Lage, die vom HF-Transceiver 33 empfangenen und an das LF-ASIC 32' weitergeleiteten Botschaften über die Schnittstelle auszulesen. Schlussendlich kann die StartUp-Zeit des Mikrocontrollers 31 für die Kommunikation zwischen Fahrzeug 1 und Schlüssel 5 bereits für die Kommunikation genutzt werden und der Ablauf so erheblich verkürzt werden.

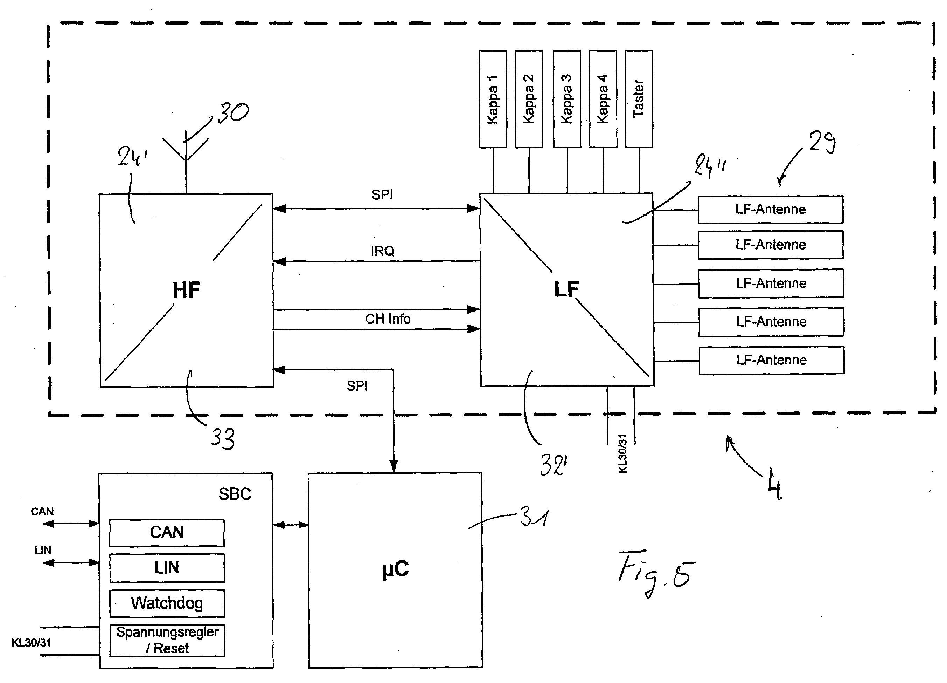

Ausgestaltung der ersten Einrichtung 4 als Version 2 gemäß Fig. 5:
Es erfolgt ein Entfernen des bisher abgesetzten Antennenmoduls 30 und Verlagerung des HF-Transceivers 33 zurück auf das Steuergerät 4. Alle bisherigen Aufgaben des Antennenmoduls 30 übernimmt das Steuergerät 4. Die Schnittstelle zwischen Antennenmodul 30 und Steuergerät 4 kann entfallen. Der HF-Transceiver 33 stellt nach einem IRQ (wird nach einem gültigen TG ausgelöst) des ASICs 32' die Kanalinformation für das ASIC 32' über eine Schnittstelle (2 Pins, Bus-Leitung o. dgl.) bereit. Sobald das ASIC 32' die Kanalinformation erhalten hat, wird analog zu Version 1 das Weckfeld gesendet (LF-Pattern mit 20, 25, 125 kHz o. dgl.). Anschließend werden die ersten Daten (z. B. HF-Kanal, Anzahl der LF-Felder o. dgl.) über LF übertragen. Sind alle Daten vom ASIC 32' verarbeitet, erhält der HF-Transceiver 33 einen Interrupt. Sobald der HF-Transceiver 33 den Trigger (Interrupt) für das Aussenden der HF-Botschaft erhalten hat, löscht dieser die Kanalinformation auf der Schnittstelle zum Transceiver 33 und beginnt das Aussenden der konfigurierten / hinterlegten HF-Botschaft(en) (z.B. mit 315,433 MHz o.dgl.). Anschließend sendet das ASIC 32' die konfgurierte Anzahl an LF-Feldern. Zwischenzeitlich ist der Mikrocontroller 31 hochgefahren und kann die vom Schlüssel / ID-Geber 5 zurückgesendeten Daten aus dem HF-Transceiver 33 auslesen und gegebenenfalls weitere Aktionen (z.B. die CAN-Kommunikation) ausführen. Die Konfiguration für den HF-Transceiver 33 und den ASIC 32' wird vom Mikrocontroller 31 vor dem Shutdown des Systems durchgeführt.

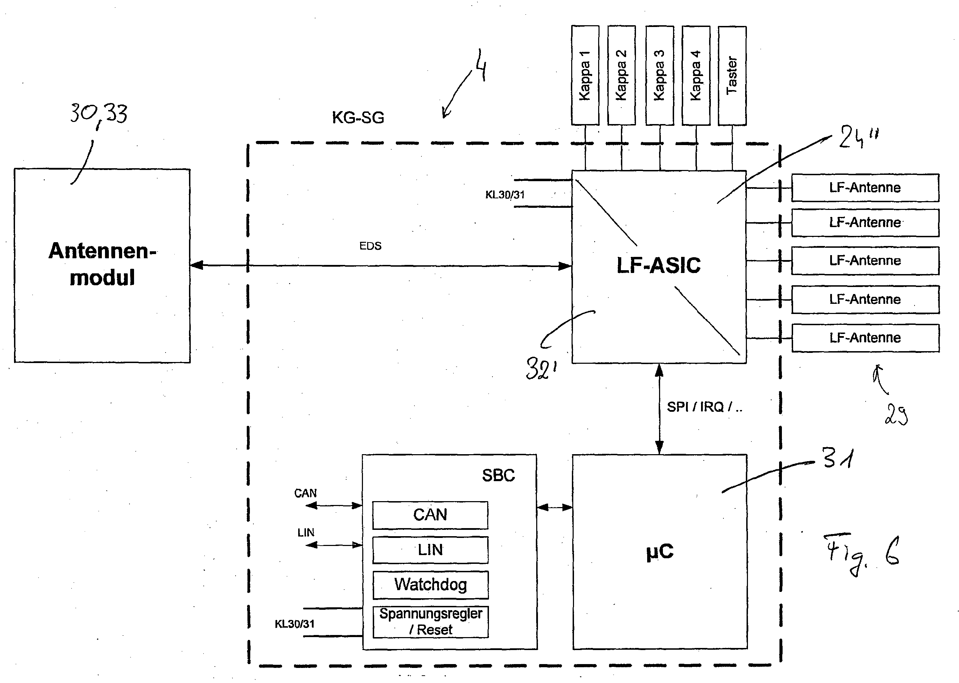

Ausgestaltung der ersten Einrichtung 4 als Version 3 gemäß Fig. 6:
Zusätzlich zu Version 2 übernimmt der HF-Transceiver 33 auch die Host-Funktionalität für das LF-ASIC 32' vom µC 31. Der Ablauf erfolgt wie bei Version 2. Die Konfiguration des ASICs 32' erfolgt über den HF-Transceiver 33, d.h. dieser fungiert als Gateway für das LF-ASIC 32'. Vorteilhafterweise ist dabei nur eine Schnittstelle im µC 31 nötig.

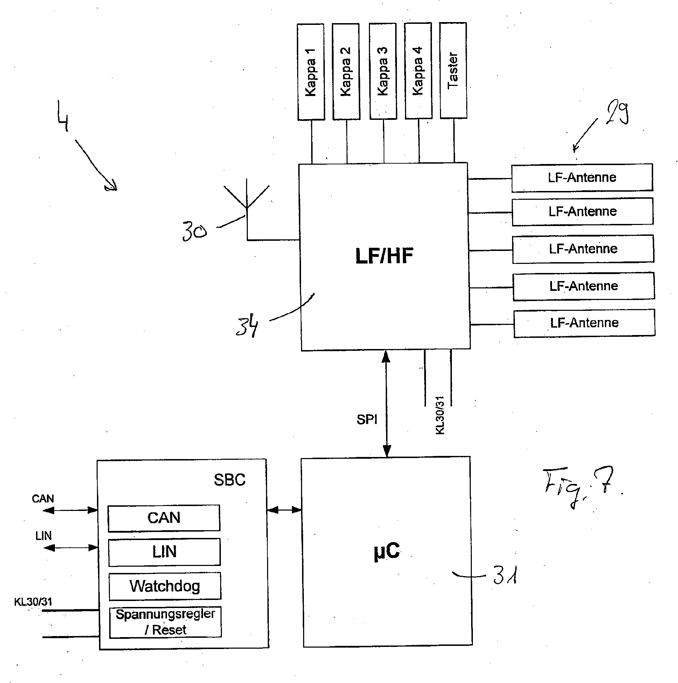

Ausgestaltung der ersten Einrichtung 4 als Version 4 gemäß Fig. 7:
Eine weitere Optimierungsmöglichkeit ist die Kombination der bisher auf zwei Chips beruhenden Kommunikationsarchitektur zu einem einzigen ASIC. Dieses deckt sowohl die LF- wie auch die HF-Kommunikation ab (Dual- bzw Single-Die ASIC-Konzept). Vorteile dieses Konzepts sind:
   - Platinenfläche (PCB)
   - niedrigere Testkosten
   - niedrigere Bestückkosten
   - höhere Integrationsdichte (und dadurch Einsparung von Chipfläche) und somit Kostenreduktion
   - einfacheres Platinenlayout (Spannung etc.)
   - Verringerung Ruhestrom (was wiederum eine CO₂-Verringerung bedeutet) aufgrund der Chip-Reduktion.
Wie man anhand der Fig. 7 erkennt, sind der HF-Sender und/oder -Empfänger und der LF-Sender sowie der LF-ASIC als eine einzige integrierte LF/HF-Schaltung 34 ausgestaltet.

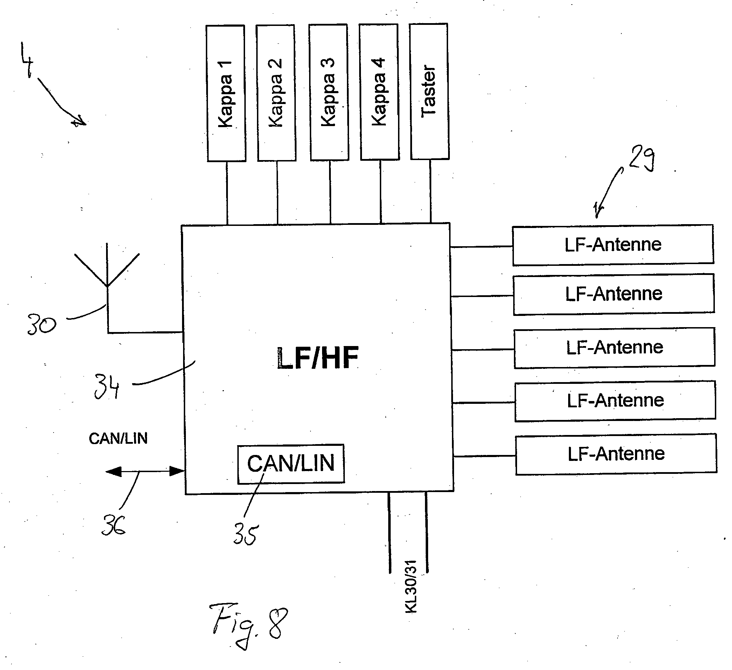

Ausgestaltung der ersten Einrichtung 4 als Version 5 gemäß Fig. 8:
Eine weitere Optimierungsmöglichkeit ist die Realisierung eines einzelnen ASICs, das sämtliche für ein KG-System benötigte Funktionalitäten abbildet. Hierbei kann dann sogar der µC komplett entfallen, da dieser nur für die externe Kommunikation (LIN / CAN o. dgl.) benötigt wird. Vorteile dieses Konzepts sind:
   - Platinenfläche (PCB)
   - niedrigere Testkosten
   - niedrigere Bestückkosten
   - höhere Integrationsdichte (also Einsparung von Chipfläche) und somit Kostenreduktion
   - einfacheres Platinenlayout (Spannung etc.)
   - Verringerung Ruhestrom (was wiederum eine CO₂-Verringerung bedeutet) aufgrund der Chip-Reduktion
   - Einfachste Integration in bisher artfremde Systeme möglich (z.B. Motorrad o. dgl.)
   - Weitere Integration zur intelligenten Antenne (Einbau des ASICs für LF, HF und Kommunikation nach außen in und/oder an die Antenne)
   - Einfachste Integration in die Fahrzeuge
   - Entfall der bisher nötigen LF-Leitungen (was eine erhebliche EMV-Reduktion und somit eine geringere Beeinflussung von anderen Steuergeräten im Fahrzeug bedeutet).

Mit dieser Version ist auch ein verteiltes, einfach zu positionierendes, skalierbares KG-System realisierbar. Wie man anhand von Fig. 8 erkennt beinhaltet die integrierte LF/HF-Schaltung 34 eine Schaltungsanordnung 35 zur externen Kommunikation mit einem Bussystem 36. Dadurch kann insbesondere auf einen Mikroprozessor in der ersten Einrichtung 4 verzichtet werden.

Allgemein und prinzipiell gilt, dass alle übertragenen Daten mit geeigneten Maßnahmen gegen Übertragungsfehler gesichert sein können. Die Versionen 1 bis 5 sind sowohl mit als auch ohne Transponderfunktionalität realisierbar.

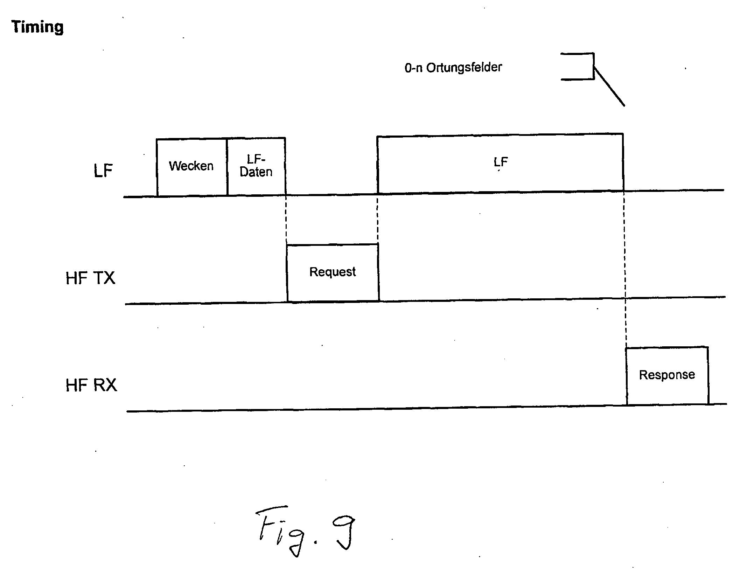

Ein Zeitdiagramm für die Kommunikation mittels LF- sowie HF-Signalen zwischen den beiden Einrichtungen 4, 5 ist in Fig. 9 dargestellt. Dabei bedeutet TX Senden und RX Empfangen der entsprechenden Daten.

Die Erfindung ist nicht auf das beschriebene und dargestellte Ausführungsbeispiel beschränkt. Die Erfindung umfasst weiterhin auch alle fachmännischen Weiterbildungen im Rahmen der Schutzrechtsansprüche. So kann ein derartiges Schließsystem nicht nur im Kraftfahrzeug eingesetzt werden. Es ist auch eine Verwendung für ein Türschloss, das sich beispielsweise an einer Immobilie o. dgl. befindet, oder für sonstige Steuergeräte möglich.

### Bezugszeichen-Liste:

- 1:: Kraftfahrzeug / Fahrzeug
- 2:: (berechtigter) Benutzer
- 3:: Schließsystem
- 4:: erste Einrichtung / Steuergerät
- 5:: zweite Einrichtung / Schlüssel
- 6:: Autotüre
- 7:: Signal
- 8:: Wirkbereich
- 9:: Zündschloss
- 10:: Lenkradverriegelung
- 11:: Start/Stop-Schalter
- 12:: (erstes) Signal / Wecksignal
- 13:: (drittes) Signal / Bereichsabgrenzungssignal
- 14:: (viertes) Signal / Rückantwortsignal
- 15:: (fünftes) Signal / (codiertes) Betriebssignal
- 16:: Türgriff
- 17:: Sender/Empfänger (in der zweiten Einrichtung)
- 18:: Logikschaltung / Mikroprozessor
- 19:: Mittel zur Messung der Feldstärke / RSS-Chip
- 20:: Eingang (von RSS-Chip)
- 21:: RSSI-Ausgang (an RSS-Chip)
- 22:: Innenraum (vom Kraftfahrzeug)
- 23:: Außenraum (vom Kraftfahrzeug)
- 24:: Sender/Empfänger (in der ersten Einrichtung)
- 24':: HF-Sender und/oder -Empfänger
- 24":: LF-Sender
- 25:: Schalter (im Türgriff / Heckgriff)
- 26:: (Näherungs)Sensor (im Türgriff)
- 27:: (zweites) Signal / Selektionssignal
- 28:: Heckgriff
- 29,a,b,c,d:: Antenne / LF-Antenne
- 30:: Antenne / RF-Antenne / Antennenmodul
- 31:: Mikroprozessor / Mikrocomputer / Hauptcontroller / Controller
- 32:: Steuerschaltung / integrierte Schaltung
- 32':: LF-ASIC / ASIC
- 33:: HF-Transceiver
- 34:: LF/HF-Schaltung
- 35:: Schaltungsanordnung (für Kommunikation mit Bussystem)
- 36:: Bussystem
- 40:: Heckbereich (von Kraftfahrzeug)

## Patentansprüche

1. Schließsystem, insbesondere für die Zugangs- und/oder Fahrberechtigung bei einem Kraftfahrzeug (1) in der Art einer KeylessEntry/Go-Funktionalität, mit einer wenigstens zwei Zustände besitzenden, als Steuereinrichtung ausgebildeten ersten Einrichtung (4), wie einer Steuereinrichtung zur Ent- und/oder Verriegelung der Autotüren (6), des Zündschlosses (9), der Lenkradverriegelung (10), zur Freigabe und/oder Sperrung der Wegfahrsperre, des Motorsteuergeräts o. dgl., und mit einer zugehörigen, in der Art eines elektronischen Schlüssels, eines ID-Gebers, einer Chipkarte o. dgl. ausgebildeten zweiten Einrichtung (5), wobei die beiden Einrichtungen (4, 5) zu deren bestimmungsgemäßen Betrieb Sender und/oder Empfänger (24, 17) für insbesondere elektromagnetische Signale (7) besitzen, derart dass eine Kommunikation zwischen den beiden Einrichtungen (4, 5) ermöglicht ist, wobei es sich insbesondere bei wenigstens einem der zwischen der zweiten Einrichtung (5) und der ersten Einrichtung (4) übertragenen Signale (7) um ein codiertes Betriebssignal (15) zur Authentifikation der zweiten Einrichtung (5) handelt, so dass nach positiver Auswertung des übertragenen Betriebssignals (15) bei berechtigter zweiter Einrichtung (5) eine Änderung des Zustandes der ersten Einrichtung (4) bewirkbar ist, und wobei die erste Einrichtung (4) einen Mikroprozessor (31) zu deren Betrieb, insbesondere zum Betrieb des Senders und/oder Empfängers (24), aufweist, **dadurch gekennzeichnet, dass** eine Steuerschaltung (32) in der ersten Einrichtung (4) zum Betrieb des Senders und/oder Empfängers (24) vorgesehen ist, und dass die Steuerschaltung (32) den Sender und/oder Empfänger (24) für wenigstens einen Teil der Kommunikation zwischen den beiden Einrichtungen (4, 5) unabhängig vom Mikroprozessor (31) betreibt.

2. Schließsystem nach Anspruch 1, **dadurch gekennzeichnet, dass** der Sender und/oder Empfänger (24) in der ersten Einrichtung (4) bei Beginn der Kommunikation zwischen den beiden Einrichtungen (4, 5) wenigstens solange mittels der Steuerschaltung (32) betrieben wird bis der Mikroprozessor (31) betriebsbereit ist, wobei insbesondere bei Beginn der Kommunikation der Mikroprozessor (31) in den bestimmungsgemäßen Betrieb übergeführt wird.

3. Schließsystem nach Anspruch 1 oder 2, **dadurch gekennzeichnet, dass** die Steuerschaltung (32) als eine integrierte Schaltung in der Art eines ASIC's ausgebildet ist.

4. Schließsystem nach Anspruch 1, 2 oder 3, **dadurch gekennzeichnet, dass** die erste Einrichtung (4) ein erstes Signal (12) für die zugehörige zweite Einrichtung (5) als Wecksignal sendet, derart dass die zweite Einrichtung (5) aus einem Ruhezustand mit verringertem Energiebedarf in einen aktivierten Zustand für den bestimmungsgemäßen Betrieb übergeführt wird, dass vorzugsweise die erste Einrichtung (4) nach Aussenden des ersten Signals (12) wenigstens ein weiteres, drittes Signal (13) als Bereichsabgrenzungssignal sendet, derart dass die zugehörige zweite Einrichtung (5) deren Standort in Bezug auf die erste Einrichtung (4), insbesondere am und/oder im Kraftfahrzeug (1), bestimmen kann, dass weiter vorzugsweise nachfolgend die zweite Einrichtung (5) ein den Standort beinhaltendes weiteres, viertes Signal (14) zur ersten Einrichtung (4) sendet, dass noch weiter vorzugsweise das codierte Betriebssignal (15) zur Authentifikation der zweiten Einrichtung (5) als fünftes Signal (15) zwischen der zweiten Einrichtung (5) und der ersten Einrichtung (4) übertragen wird, wobei das der Authentifikation dienende fünfte elektromagnetische Signal (15) bevorzugterweise in einer bidirektionalen Kommunikation bestehend aus mehreren Teilsignalen zwischen der ersten und der zweiten Einrichtung (4, 5) übertragen wird, und dass nochmals weiter vorzugsweise die erste Einrichtung (4) zwischen dem ersten und dem dritten Signal (12, 13) ein zweites Signal (27) zur zweiten Einrichtung (5) als Selektionssignal sendet, wobei insbesondere das zweite Signal (27) eine Information über die Identität des Kraftfahrzeugs (1) enthält, derart dass zur ersten Einrichtung (4) zugehörige zweite Einrichtungen (5) im aktivierten Zustand verbleiben und im aktivierten Zustand befindliche, nicht zugehörige zweite Einrichtungen in den Ruhezustand zurückgeführt werden.

5. Schließsystem nach einem der Ansprüche 1 bis 4, **dadurch gekennzeichnet, dass** die Trägerwelle für das erste Signal (12) und/oder das dritte Signal (13) eine im induktiven, niederfrequenten (LF-)Bereich liegende Frequenz, die beispielsweise in etwa 20, 120, 125 kHz o. dgl. beträgt, aufweist, und dass vorzugsweise die Trägerwelle für das zweite Signal (27) und/oder das vierte Signal (14) und/oder das fünfte Signal (15) eine im höherfrequenten (RF/HF-)Bereich liegende Frequenz, die insbesondere in etwa 315, 433, 868 MHz o. dgl. beträgt, aufweist.

6. Schließsystem nach einem der Ansprüche 1 bis 5, **dadurch gekennzeichnet, dass** die erste Einrichtung (4) einen HF-Sender und/oder -Empfänger (24') sowie einen LF-Sender (24") aufweist, und dass der LF-Sender (24") einen LF-ASIC (32') zu dessen Betrieb umfasst.

7. Schließsystem nach einem der Ansprüche 1 bis 6, **dadurch gekennzeichnet, dass** es sich bei der Steuerschaltung (32) um den LF-ASIC (32') handelt.

8. Schließsystem nach einem der Ansprüche 1 bis 7, **dadurch gekennzeichnet, dass** der HF-Sender und/oder -Empfänger und der LF-Sender sowie der LF-ASIC als eine einzige integrierte LF/HF-Schaltung (34) ausgestaltet ist.

9. Schließsystem, insbesondere für die Zugangs- und/oder Fahrberechtigung bei einem Kraftfahrzeug (1) in der Art einer KeylessEntry/Go-Funktionalität, mit einer wenigstens zwei Zustände besitzenden, als Steuereinrichtung ausgebildeten ersten Einrichtung (4), wie einer Steuereinrichtung zur Ent- und/oder Verriegelung der Autotüren (6), des Zündschlosses (9), der Lenkradverriegelung (10), zur Freigabe und/oder Sperrung der Wegfahrsperre, des Motorsteuergeräts o. dgl., und mit einer zugehörigen, in der Art eines elektronischen Schlüssels, eines ID-Gebers, einer Chipkarte o, dgl. ausgebildeten zweiten Einrichtung (5), wobei die beiden Einrichtungen (4, 5) zu deren bestimmungsgemäßen Betrieb Sender und/oder Empfänger (24, 17) für insbesondere elektromagnetische Signale (7) besitzen, derart dass eine Kommunikation zwischen den beiden Einrichtungen (4, 5) ermöglicht ist, wobei es sich insbesondere bei wenigstens einem der zwischen der zweiten Einrichtung (5) und der ersten Einrichtung (4) übertragenen Signale (7) um ein codiertes Betriebssignal (15) zur Authentifikation der zweiten Einrichtung (5) handelt, so dass nach positiver Auswertung des übertragenen Betriebssignals (15) bei berechtigter zweiter Einrichtung (5) eine Änderung des Zustandes der ersten Einrichtung (4) bewirkbar ist, und wobei eine Steuerschaltung (32) in der ersten Einrichtung (4) zum Betrieb des Senders und/oder Empfängers (24) vorgesehen ist, **dadurch gekennzeichnet, dass** die erste Einrichtung (4) einen HF-Sender und/oder - Empfänger (24') sowie einen LF-Sender (24") aufweist, dass der LF-Sender (24") einen LF-ASIC (32') zu dessen Betrieb umfasst, dass es sich bei der Steuerschaltung (32) um den LF-ASIC (32') handelt, dass der HF-Sender und/oder -Empfänger und der LF-Sender sowie der LF-ASIC als eine einzige integrierte LF/HF-Schaltung (34) ausgestaltet ist, und dass die integrierte LF/HF-Schaltung (34) eine Schaltungsanordnung (35) zur externen Kommunikation mit einem Bussystem (36) beinhaltet, derart dass auf einen Mikroprozessor in der ersten Einrichtung (4) zu deren Betrieb verzichtet werden kann.

## Claims

1. Locking system, in particular for access and/or drive authorization in a motor vehicle (1) in the manner of a keyless entry/go functionality, with a first device (4) designed as a control device possessing at least two states, in the form of a control device for unlocking and/or locking the car doors (6), the ignition lock (9), the steering wheel lock (10), for releasing and/or blocking the immobilizer, the engine control unit or the like, and with an associated second device (5) in the form of an electronic key, an ID transmitter, a smartcard or the like, wherein the two devices (4, 5) possess a transmitter and/or receiver (24, 17) in particular for electromagnetic signals (7) for their intended operation, so that communication between the two devices (4, 5) is possible, wherein, in particular, at least one of the signals (7) transmitted between the second device (5) and the first device (4) is a coded operating signal (15) for the authentication of the second device (5), so that, following positive evaluation of the transmitted operating signal (15) at the authorized second device (5), a change of state of the first device (4) is effected, and wherein the first device (4) comprises a microprocessor (31) for the operation thereof, in particular for the operation of the transmitter and/or receiver (24),
**characterized in that**
a control circuit (32) is provided in the first device (4) for operation of the transmitter and/or receiver (24), and that the control circuit (32) operates the transmitter and/or receiver (24) independently of the microprocessor (31) for at least a part of the communication between the two devices (4, 5).

2. Locking system according to claim 1,
**characterized in that**
the transmitter and/or receiver (24) in the first device (4) is operated at the beginning of the communication between the two devices (4, 5) by means of the control circuit (32) at least until the microprocessor (31) is ready for operation, wherein the microprocessor (31) begins its intended operation in particular at the beginning of communication.

3. Locking system according to claim 1 or 2,
**characterized in that**
the control circuit (32) is designed as an integrated circuit such as an ASIC.

4. Locking system according to claim 1, 2 or 3,
**characterized in that**
the first device (4) sends a first signal (12) to the associated second ASIC (5) as a wake-up signal, in such a way that the second ASIC (5) is transferred from a resting state with reduced energy requirements to an activated state for the intended operation, wherein preferably after sending the first signal (12), the first device (4) sends at least a further third signal (13) as a range delimitation signal, so that the associated second device (5) can determine its location in relation to the first device (4), in particular on and/or in the motor vehicle (1), wherein further preferably subsequently the second device (5) sends further fourth signal (14) to the first device (4) containing the location, that still further preferably the coded operating signal (15) for authentication of the second device (5) is transmitted as a fifth signal (15) between the second device (5) and the first device (4), wherein the fifth electromagnetic signal (15) serving for the authentication is preferably transmitted in a bidirectional communication consisting of several part signals between the first and second devices (4, 5), and that, again still more preferably, the first device (4) sends a second signal (27) to the second device (5) as a selection signal between the first and the third signals (12, 13), wherein, in particular, the second signal (27) contains information about the identity of the motor vehicle (1) in such a way that the second device (5) associated with the first device (4) remains in the activated state, while the second devices in the activated state but not associated are returned to the idle state.

5. Locking system according to any one of the claims 1 to 4,
**characterized in that**
the carrier wave for the first signal (12) and/or the third signal (13) lies in the inductive, low frequency (LF) range, for example, about 20, 120, 125 kHz or the like, and wherein the carrier wave for the second signal (27) and/or the fourth signal (14) and/or the fifth signal (15) preferably lies in a higher frequency (RF/HF) range, in particular about 315, 433, 868 MHz or the like.

6. Locking system according to one of the claims 1 to 5,
**characterized in that**
the first device (4) comprises an HF transmitter and/or receiver (24') as well as an LF-transmitter (24"), wherein the LF transmitter (24") comprises an LF-ASIC (32') for its operation.

7. Locking system according to one of the claims 1 to 6,
**characterized in that**
the control circuit (32) is an LF-ASIC (32').

8. Locking system according to one of the claims 1 to 7,
**characterized in that**
the HF transmitter and/or receiver and the LF transmitter as well as the LF-ASIC is configured as a single integrated LF/HF circuit (34).

9. Locking system, in particular for access and/or drive authorization in a motor vehicle (1) in the manner of a keyless entry/go functionality, with a first device (4) designed as a control device possessing at least two states in the form of a control device for unlocking and/or locking the car doors (6), the ignition lock (9), the steering wheel lock (10), for releasing and/or blocking the immobilizer, the engine control unit or the like, and with an associated second device (5) in the form of an electronic key, an ID transmitter, a smartcard or the like, wherein, the two devices (4, 5) possess a transmitter and/or receiver (24, 17) in particular for electromagnetic signals (7) for their intended operation, so that communication between the two devices (4, 5) is possible, wherein, in particular, at least one of the signals (7) transmitted between the second device (5) and the first device (4) is a coded operating signal (15) for authentication of the second device (5), so that, following positive evaluation of the transmitted operating signal (15) at the authorized second device (5), a change of state of the first device (4) is effected, and wherein a control circuit (32) is provided in the first device (4) for operation of the transmitter and/or receiver (24),
**characterized in that**
the first device (4) comprises an HF transmitter and/or receiver (24') as well as an LF transmitter (24"), wherein the LF transmitter (24") comprises an LF-ASIC (32') for its operation, the control circuit (32) is an LF-ASIC (32'), the HF transmitter and/or receiver and the LF transmitter as well as the LF-ASIC are configured as a single integrated LF/HF circuit (34), and wherein the integrated LF/HF circuit (34) contains a circuit arrangement (35) for external communication with a bus system (36), so that a microprocessor may be omitted in the first device (4) for the operation thereof.

## Revendications

1. Système de fermeture, plus particulièrement pour l'autorisation d'accès et/ou de conduite dans un véhicule (1), de type fonctionnalité KeylessEntry/Go, avec un premier dispositif (4) présentant au moins deux états, conçu comme un dispositif de commande, comme un dispositif de commande pour le déverrouillage et/ou le verrouillage des portières (6), du contact d'allumage (9), du verrouillage de direction (10), pour la libération et/ou le blocage du dispositif d'immobilisation, du dispositif de commande du moteur ou autre et avec un deuxième dispositif (5) correspondant conçu sous la forme d'une clé électronique, d'un codeur, d'une carte à puce ou autre, les deux dispositifs (4, 5) comprenant, pour leur utilisation conforme à l'usage prévu, des émetteurs et/ou des récepteurs (24, 17), plus particulièrement pour des signaux électromagnétiques (7), de façon à ce qu'une communication soit possible entre les deux dispositifs (4, 5), les signaux (7) transmis plus particulièrement entre le deuxième dispositif (5) et le premier dispositif (4) étant plus particulièrement un signal de fonctionnement codé (15) pour l'authentification du deuxième dispositif (5), de façon à ce que, après une analyse positive du signal de fonctionnement (15) transmis, lorsque le deuxième dispositif (5) est autorisé, une modification de l'état du premier dispositif (4) puisse être provoquée et le premier dispositif (4) comprenant un microprocesseur (31) pour son fonctionnement, plus particulièrement pour le fonctionnement de l'émetteur et/ou du récepteur (24), **caractérisé en ce qu'**un circuit de commande (32) est prévu dans le premier dispositif (4) pour le fonctionnement de l'émetteur et/ou du récepteur (24) et **en ce que** le circuit de commande (32) fait fonctionner l'émetteur et/ou le récepteur (24) de manière indépendante du microprocesseur (31) pour au moins une partie de la communication entre les deux dispositifs (4, 5).

2. Système de fermeture selon la revendication 1, **caractérisé en ce que** l'émetteur et/ou le récepteur (24) dans le premier dispositif (4) est utilisé au début de la communication entre les deux dispositifs (4, 5) au moyen du circuit de commande (32) au moins jusqu'à ce que le microprocesseur (31) soit prêt à fonctionner, le fonctionnement conforme à l'usage prévu du microprocesseur (31) commençant plus particulièrement au début de la communication.

3. Système de fermeture selon la revendication 1 ou 2, **caractérisé en ce que** le circuit de commande (32) est conçu comme un circuit intégré du type ASIC.

4. Système de fermeture selon la revendication 1, 2 ou 3, **caractérisé en ce que** le premier dispositif (4) envoie un premier signal (12) pour le deuxième dispositif (5) correspondant en tant que signal de réveil de façon à ce que le deuxième dispositif (5) puisse passer d'un état de repos avec une faible consommation d'énergie à un état actif pour le fonctionnement conforme à l'usage prévu, **en ce que** de préférence le premier dispositif (4) envoie, après l'envoi du premier signal (12), au moins un troisième signal (13) en tant que signal de délimitation de zone, de façon à ce que le deuxième dispositif (5) correspondant puisse détermine sa localisation par rapport au premier dispositif (4), plus particulièrement sur et/ou dans le véhicule (1), **en ce que** de préférence le deuxième dispositif (5) envoie ensuite un quatrième signal (14) contenant la localisation au premier dispositif (4), **en ce que**, de préférence, le signal de fonctionnement codé (15) est transmis, pour l'authentification du deuxième dispositif (5) en tant que cinquième signal (15) entre le deuxième dispositif (5) et le premier dispositif (4), le cinquième signal électromagnétique (15) servant à l'authentification étant transmis de préférence dans une communication bidirectionnelle constituée de plusieurs signaux partiels entre le premier et le deuxième dispositif (4, 5) et **en ce que**, de préférence, le premier dispositif (4) en voie, entre le premier et le troisième signal (12, 13), un deuxième signal (27) au deuxième dispositif (5) en tant que signal de sélection, plus particulièrement le deuxième signal (27) contenant une information concernant l'identité du véhicule (1), de façon à ce que les deuxièmes dispositifs (5) correspondants au premier dispositif (4) restent dans l'état actif et les deuxièmes dispositifs non correspondants se trouvant dans l'état actif retournent à l'état de repos.

5. Système de fermeture selon l'une des revendications 1 à 4, **caractérisé en ce que** l'onde porteuse pour le premier signal (12) et/ou le troisième signal (13) présente une fréquence se trouvant dans le domaine inductif à basse fréquence (LF), qui est par exemple d'environ 20, 120, 125 kHz ou autre et **en ce que** de préférence l'onde porteuse pour le deuxième signal (27) et/ou le quatrième signal (14) et/ou le cinquième signal (15) présentent une fréquence se trouvant dans le domaine des hautes fréquences (RF/HF), qui est plus particulièrement d'environ 315, 433, 868 MHz ou autre.

6. Système de fermeture selon l'une des revendications 1 à 5, **caractérisé en ce que** le premier dispositif (4) comprend un émetteur et/ou un récepteur HF (24') ainsi qu'un émetteur LF (24") et **en ce que** l'émetteur LF (24") comprend pour son fonctionnement un ASIC LF (32').

7. Système de fermeture selon l'une des revendications 1 à 6, **caractérisé en ce que** le circuit de commande (32) est l'ASIC LF (32').

8. Système de fermeture selon l'une des revendications 1 à 7, **caractérisé en ce que** l'émetteur et/ou le récepteur HF et l'émetteur LF ainsi que l'ASIC LF sont conçus comme un seul circuit LF/HF intégré (34).

9. Système de fermeture, plus particulièrement pour l'autorisation d'accès et/ou de conduite dans un véhicule (1), de type fonctionnalité KeylessEntry/Go, avec un premier dispositif (4) présentant au moins deux états, conçu comme un dispositif de commande, comme un dispositif de commande pour le déverrouillage et/ou le verrouillage des portières (6), du contact d'allumage (9), du verrouillage de direction (10), pour la libération et/ou le blocage du dispositif d'immobilisation, du dispositif de commande du moteur ou autre et avec un deuxième dispositif (5) correspondant conçu sous la forme d'une clé électronique, d'un codeur, d'une carte à puce ou autre, les deux dispositifs (4, 5) comprenant, pour leur utilisation conforme à l'usage prévu, des émetteurs et/ou des récepteurs (24, 17), plus particulièrement pour des signaux électromagnétiques (7), de façon à ce qu'une communication soit possible entre les deux dispositifs (4, 5), les signaux (7) transmis plus particulièrement entre le deuxième dispositif (5) et le premier dispositif (4) étant plus particulièrement un signal de fonctionnement codé (15) pour l'authentification du deuxième dispositif (5), de façon à ce que, après une analyse positive du signal de fonctionnement (15) transmis, lorsque le deuxième dispositif (5) est autorisé, une modification de l'état du premier dispositif (4) puisse être provoquée et un circuit de commande (32) étant prévu dans le premier dispositif (4) pour le fonctionnement de l'émetteur et/ou du récepteur (24), **caractérisé en ce que** le premier dispositif (4) comprend un émetteur et/ou un récepteur HF (24') ainsi qu'un émetteur LF (24"), **en ce que** l'émetteur LF (24") comprend pour son fonctionnement un ASIC LF (32'), **en ce que** le circuit de commande (32) est l'ASIC LF (32'), **en ce que** l'émetteur et/ou le récepteur HF et l'émetteur LF ainsi que l'ASIC LF sont conçus comme un seul circuit LF/HF intégré (34) et **en ce que** le circuit LF/HF intégré (34) contient un circuit (35) pour la communication externe avec un système de bus (36), de façon à ce qu'un microprocesseur soit inutile pour le fonctionnement du premier dispositif (4).
